(19) Europäisches Patentamt
European Patent Office
Office européen des brevets

(11) Veröffentlichungsnummer: **0 164 538**
**B1**

(12) **EUROPÄISCHE PATENTSCHRIFT**

(45) Veröffentlichungstag der Patentschrift: **26.08.87**

(51) Int. Cl.⁴: **C 09 K 3/14**, C 09 D 11/02

(21) Anmeldenummer: **85105013.8**

(22) Anmeldetag: **25.04.85**

(54) **Verfahren zur Herstellung von Antirutschlacken.**

(30) Priorität: **29.05.84 DE 3420009**

(43) Veröffentlichungstag der Anmeldung: **18.12.85 Patentblatt 85/51**

(45) Bekanntmachung des Hinweises auf die Patenterteilung: **26.08.87 Patentblatt 87/35**

(84) Benannte Vertragsstaaten: **AT BE CH DE FR GB IT LI LU NL SE**

(56) Entgegenhaltungen:
**BE - A - 678 508**
**FR - A - 113 002**
**FR - A - 2 140 615**

(73) Patentinhaber: **SCHERING AKTIENGESELLSCHAFT Berlin und Bergkamen, Waldstrasse 14 Postfach 15 40, D-4709 Bergkamen (DE)**

(72) Erfinder: **Drawert, Manfred, Dr. Dipl.-Chem., Alte Kreisstrasse 13, D-5758 Fröndenberg (DE)**
Erfinder: **Krase, Horst, Unterster Kamp 14, D-4700 Hamm 1 (DE)**

**EP 0 164 538 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von Antirutschlacken, worin neben üblichen Druckfarbenbindemitteln Zusätze von Kondensationsprodukten auf Basis polymerisierter Fettsäuren und diprimären Ätherdiaminen und gegebenenfalls Co-Diaminen verwendet werden.

Die Verpackung von Massenprodukten erfolgt heute zunehmend unter Verwendung von Folien aus den verschiedenartigen Kunststoffen, wie z.B. Polyäthylen, Polypropylen, Polyvinylchlorid, Polyester oder Papier. Bei allen Vorteilen, die sich hieraus ergeben, weisen insbesondere grössere Tüten oder Säcke aus diesen Folien den Nachteil auf, dass sie nur bedingt stapelbar sind. Aufgrund der glatten Oberflächen dieser Materialien liegen sie nicht fest aufeinander, sondern geraten leicht ins Rutschen. Das Bedrucken mit üblichen Druckfarben hat zu keiner Verbesserung geführt.

Es sind bereits verschiedene Versuche unternommen worden, die glatten Oberflächen durch Zusätze von Füllstoffen, wie z.B. $TiO_2$ oder Übersprühen bzw. Bedrucken mit abstumpfend wirkenden Lacken rutschfest zu machen. Zur Erzielung eines Antirutscheffektes mischt man dabei in der Regel den üblichen Druckfarbenbindemitteln spezielle Zusätze zu. An diese Zusätze werden eine Reihe von Anforderungen gestellt, welche alle gleichzeitig erfüllt werden müssen. Sie müssen

1. den Harzen den Antirutscheffekt für einen über den der üblichen Lagerzeit hinausgehenden Zeitraum verleihen,
2. mit den auf diesem Gebiet üblichen Druckfarbenbindemittel verträglich sein,
3. mit dem üblicherweise für die Druckfarbenbindemittel verwendeten Lösungsmittel verträglich sein,
4. in Mischung mit den Druckfarbenbindemitteln blockfest sein.

Weiterhin sollen diese Zusätze weder die Haftfestigkeit des Bindemittels auf den verschiedenen Substraten noch die Oberflächenstruktur oder den Glanz des ausgehärteten Lackfilms beeinträchtigen.

Gegenüber den Füllstoffzusätzen brachten Kondensationsprodukte aus polymerisierten Fettsäuren und überschüssigen Polyaminen in einigen Druckfarbenbindemitteln einen gewissen Fortschritt hinsichtlich des gewünschten Antirutscheffektes, wiesen aber noch erhebliche Mängel bezüglich der weiteren Forderungen der Praxis auf. So verschwindet der anfänglich vorhandene Effekt aufgrund der Carbonatisierung bzw. der Carbamatisierung der freien Aminogruppen innerhalb relativ kurzer Zeit, sind die Produkte nicht mit dem auf diesem Gebiet gebräuchlichsten Bindemittel, insbesondere der Nitrocellulose, verträglich und tritt in manchen Fällen eine Beeinträchtigung des Lackfilms auf.

Aufgabe der vorliegenden Erfindung war es daher, diese Nachteile des Standes der Technik zu überwinden und ein Verfahren zu finden, welche die Forderungen der Praxis hinsichtlich der Eigenschaften von Antirutschlacken erfüllt.

Diese Aufgabe wird erfindungsgemäss gelöst durch ein Verfahren zur Herstellung von Antirutschlacken auf Basis von 1) üblichen Druckfarbenbindemitteln und 2) abstumpfend wirkenden Zusätzen, gegebenenfalls unter Mitverwendung von 3) Lösungsmitteln, Farbstoffen, Pigmenten, Antioxidantien, das dadurch gekennzeichnet ist, dass als Komponente 2) Kondensationsprodukte aus 1,5 - 2 Äquivalenten polymerisierter Fettsäuren und 1 Äquivalent mindestens eines diprimären Ätherdiamins und gegebenenfalls mindestens eines Co-Diamins in Mengen von 5 - 70 Gew.-%, bezogen auf Druckfarbenbindemittel, verwendet werden.

Weitere Gegenstände der Erfidung sind durch die Ansprüche 2 bis 10 gekennzeichnet.

Die Herstellung der erfindungsgemäss mitverwendeten abstumpfend wirkenden Zusätze erfolgt durch Kondensation von polymerisierten Fettsäuren und diprimären Ätherdiaminen, gegebenenfalls unter Mitverwendung von Co-Diaminen.

Unter den polymerisierten Fettsäuren werden Produkte verstanden, die aus ungesättigten natürlichen und synthetischen einbasischen aliphatischen Fettsäuren mit 16 - 22 Kohlenstoffatomen, bevorzugt 18 C-Atomen, nach bekannten Methoden erhältlich sind (vgl. DE-OS 1 443 938, DE-OS 1 443 968, DE-PS 2 118 702 und DE-PS 1 280 852).

Typische im Handel erhältliche polymerisierte Fettsäuren, die auch als dimere Fettsäuren bezeichnet werden, haben etwa folgende Zusammensetzung:

| | |
|---|---|
| monomere Säuren | 5 - 15 Gew.-% |
| dimere Säuren | 60 - 80 Gew.-% |
| trimere und höherfunktionelle Säuren | 10 - 35 Gew.-% |

Es können jedoch auch dimere Fettsäuren verwendet werden, die nach bekannten Verfahren hydriert worden sind und/oder deren Dimeranteil durch geeignete Destillationsverfahren auf $> 80$ Gew.-% angereichert worden ist. Durch Mischung verschiedener dimerer Fettsäuren mit unterschiedlichen Gehalten der einzelnen Anteile sowie gezielten Zusätzen von monomeren, dimeren oder trimeren und höherpolymerisierten Fraktionen ist es möglich, eine dimerisierte Fettsäure der jeweils gewünschten Zusammensetzung herzustellen.

Erfindungsgemäss bevorzugt werden polymerisierte Fettsäuren mit einem Gehalt von 60 - 80 Gew.-% an dimerer Fettsäure.

Die zur Herstellung der Kondensationsprodukte verwendeten diprimären Ätherdiamine haben die allgemeine Formel

$$H_2N\text{-}R\text{-}NH_2 \qquad I$$

worin

a) $R = -(CH_2)_n-O-(R^1-O)_x-CH_2)_n-$
mit $n = 2 - 5$, insbesondere $n = 3$, $x = 0, 1, 2, 3$, und $R^1$ = Alkylenrest mit 1 - 12 C-Atomen der gegebenenfalls durch einen Alkylrest mit 1 - 4 insbesondere $-CH_3$, substituiert sein kann oder

b) $R = -\underset{\substack{|\\R^2}}{C}-CH_2-(O-CH_2-\underset{\substack{|\\R^2}}{CH}-)_m$

mit $m = 2 - 35$, insbesondere 2 - 14 und $R^2 = H$ oder $-CH_3$ oder

c) $R = -CH_2)_3-O-[(CH_2)_4-O]_k-(CH_2)_3-$
mit k = 4 - 18, insbesondere 7 - 11.

Als Ätherdiamine der allgemeinen Formel, die nach bekannten Verfahren hergestellt werden können, seien beispielsweise genannt:

1,7-Diamino-4-oxa-heptan, 1,7-Diamino-3,5-dioxaheptan, 1,10-Diamino-4,7-dioxadekan, 1,10-Diamino-4,7-dioxa-5-methyldekan, 1,11-Diamino--4,8-dioxaundekan, 1,11-Diamino-4,8-dioxa-5-methylundekan, 1,11-Diamino-4,8-dioxa-5,6-dimethyl-7-propyonylundekan, 1,14-Diamino-4,7,10-trioxatetradekan, 1,13-Diamino-4,7,10-trioxa-5,8-dimethyltridekan, 1,16-Diamino-4,7,10,13-tetraoxahexadekan, 1,20-Diamino-4,17-dioxaeicosan und insbesondere 1,12-Diamino-4,9-dioxadodekan, 1,14-Diamino-4,11-dioxatetradekan, 1,14-Diamino-6,6,8(6,8,8)-trimethyl-4,11-dioxatetradekan, 1,11-Diamino-6,6-dimethyl-4,8-dioxaundekan sowie die in der allgemeinen Formel unter b) und c) aufgeführten Verbindungen mit m = 2 - 14 und k = 7 bis 11.

Diese Ätherdiamine können allein oder in Mischung untereinander verwendet werden.

Als erfindungsgemäss mitverwendete Co-Diamine kommen Verbindungen der allgemeinen Formel I in Betracht, in welcher R ein gegebenenfalls durch kurzkettige Alkylgruppen, insbesondere die Methylgruppe, ein substituierter aliphatischer Kohlenwasserstoff mit 2 - 6 Kohlenstoffatomen in der Hauptkette bedeutet, wie z.B. 1,2-Diaminoäthan, 1,2-Diaminopropan, 1,3-Diaminopropan, 1,3-Diaminopropan, Diaminobutan und 1,6-Diaminohexan, 2,4,4(2,2,4)-Trimethyl-1,6-diaminohexan, 1,3-Diamino-2,2-dimethylpropan. Während die Ätherdiamine allein verwendet werden können, werden die Co-Diamine immer nur zusammen mit den Ätherdiaminen bzw. deren Mischungen eingesetzt. Das Mischungsverhältnis zwischen Ätherdiamin und Co-Diamin liegt zwischen 0,2 : 0,8 bis = 1 : 0, vorzugsweise zwischen 0,7 : 0,3 bis 0,3 : 0,7 und insbesondere bei 0,5 : 0,5.

Das Äquivalenzverhältnis zwischen der Säurekomponente und der Aminkomponente kann zwischen 1,5 : 1 bis 2 : 1 variiert werden, wobei erfindungsgemäss ein Äquivalenzverhältnis von ca. 2 : 1 bevorzugt wird.

Die Kondensation der Säuren und Amine erfolgt unter an sich bekannten Bedingungen: anfangs unter einer Inertgasatmosphäre, später unter reduziertem Druck von ca. 10 - 20 mbar und 150 - 250°C über einen Zeitraum von ca. 6 Std.

Als Druckfarbenbindemittel kommen die auf dem Verpackungsdruck (Tief- und Flexodruck) üblichen Produkte wie Ketonharze, Maleinatharze, Acrylatharze, Kollophoniumharze und vorzugsweise Polyamidharze und Nitrocellulose in Betracht.

Die erfindungsgemäss mitverwendeten, in Druckfarbenbindemitteln abstumpfend wirkenden Kondensationsprodukte weisen zwar mit allen üblichen Bindemitteln eine gute Verträglichkeit auf, zeichnen sich aber durch ihre besonders gute Verträglichkeit mit Nitrocellulose und ihren gebräuchlichen Lösungsmitteln bzw. Lösungsmittelgemischen aus.

Die erfindungsgemäss bevorzugt mitverwendeten Nitrocellulosen sind niedrigviskose alkohol- und esterlösliche Typen nach Normtyp A und E (DIN 53 179).

Als Lösungsmittel für die Druckfarbenbindemittel werden üblicherweise kurzkettige Alkohole oder Mischungen dieser Alkohole mit aliphatischen und aromatischen Kohlenwasserstoffen, Estern, Ketonen verwendet. In diesen Lösungsmitteln sind die erfindungsgemäss mitverwendeten Kondensationsprodukte einmal gut verträglich, zum anderen auch in hohem Masse verdünnbar.

Die Verdünnbarkeit ist wichtig, da sonst in der Praxis z.B. bei der Ergänzung von Lösungsmittelverlusten Trübungen durch ausfallende Harze auftreten und dadurch die Oberflächeneigenschaften und die Qualität des Lackfilms beeinträchtigt werden können. Für glänzende Lackoberflächen müssen daher die Bindemittel einschliesslich Zusätze klare Lösungen ergeben, wobei auch nach Verdunstung des Lösungsmittels keine Unverträglichkeit auftreten darf.

Die Druckfarbenbindemittel werden in üblicher Weise als 25 - 40%ige Lösungen verarbeitet. Von den erfindungsgemäss mitverwendeten Kondensationsprodukten werden möglichst konzentrierte Lösungen, vorzugsweise ca. 75%ig, hergestellt.

Die gegebenenfalls in den Lacken mitverwendeten Farbstoffe, Pigmente und Antioxidantien sind die auf dem Drucksektor üblichen Handelsprodukte.

Als Substrate, auf welche die erfindungsgemäss hergestellten Antirutschlacke aufgetragen werden können, eignen sich alle auf dem Verpackungssektor üblichen Materialien wie Papier, Zellglas und Kunststoffe wie z.B. Polyäthylen, Polypropylen, Polyester, PVC und daraus hergestellte Verbundfolien.

Die in den Beispielen mitverwendete polymerisierte Fettsäure hat die folgende Zusammensetzung:

| | TYP A Gew.-% | Typ B Gew.-% | Typ C Gew.-% |
|---|---|---|---|
| Monomere Fettsäure | 2,9 | 3,9 | 1,0 |
| Dimere Fettsäure | 80,0 | 71,9 | 96,8 |
| Trimere und höherpolymerisierte Fettsäure | 17,1 | 24,2 | 2,2 |

*Herstellung des Antirutschzusatzes*

*Beispiel 1*

2 Äquivalente der polymerisierten Fettsäure vom Typ A und 1 Äquivalent 1,12-Diamino-4,9-dioxadodekan wurden unter Stickstoffatmosphäre und beständigem Rühren innerhalb von 2 Std. auf 230°C aufgeheizt. Nach einer Reaktionszeit von 2 Std. bei 230°C wurde langsam ein Vakuum von ca. 15 mbar angelegt und die Reaktion weitere 2 Std. fortgeführt. Nach Abkühlung auf ca. 100°C wurde unter Rühren und Rückfluss mit Äthanol eine 75%ige Lösung hergestellt.

Die weiteren in der Tabelle 1 aufgeführten Harze wurden analog Beispiel 1 hergestellt.

TABELLE 1

| Beispiel | Dimere Fettsäure | Äquiv. | Ätherdiamin | Co-Diamin | Äquivalente Äther-diamin | Co-Di amin |
|---|---|---|---|---|---|---|
| 1 | Typ A | 2 | 1,12-Diamino-4,9-dioxa-dodecan | — | 1 | — |
| 2 | » | 2 | 1,14-Diamino-4,11-dioxa-tetradecan | — | 1 | — |
| 3 | » | 2 | Bis(3-aminopropyl)-polytetrahydrofuran MG 1390 | — | 1 | — |
| 4 | » | 2 | 1,13-Diamino-4,7,10-trioxatridecan | — | 1 | — |
| 5 | Typ B | 2 | 1,12-Diamino-4,9-dioxa-dodecan | Ätherdiamin | 0,2 | 0,8 |
| 6 | » | 2 | Bis-(3-aminopropyl)-polytetrahydrofuran MG 750 | » | 0,3 | 0,7 |
| 7 | Typ A | 2 | Polyoxyäthylendiamin MG 104 | » | 0,5 | 0,5 |
| 8 | » | 2 | 1,14-Diamino-4,11-dioxa-tetradecan | » | 0,7 | 0,3 |
| 9 | » | 2 | 1,12-Diamino-4,9-dioxa-dodecan | Hexamethylen-diamin | 0,9 | 0,1 |
| 10 | » | 2 | » | Trimethylhexa-methylendiamin | 0,7 | 0,3 |
| 11 | » | 2 | » | 1,2-Propylen-diamin | 0,5 | 0,5 |
| 12 | » | 1,5 | » | — | 1 | — |
| 13 | » | 1,5 | Polyoxyäthylendiamin MG 676 | Äthylendiamin | 0,8 | 0,2 |
| 14 | Typ C | 2 | 1,12-Diamino-4,9-dioxa-dodecan | » | 0,3 | 07 |
| 15 | Typ A | 2 | 1,12-Diamino-4,9-dioxa-dodecan<br>1,14-Diamino-4,11-dioxa-tetradecan | Äthylendiamin | 0,3<br>0,3 | 0,4 |
| 16 | » | 2 | 1,12-Diamino-4,9-dioxa-dodecan | Äthylendiamin<br>1,2-Propylen-diamin | 0,6 | 0,2<br>0,2 |
| 17 | » | 2 | 1,12-Diamino-4,9-dioxa-dodecan | Äthylendiamin | 0,5 | 0,5 |

Da die in der Tabelle 1 ausgeführten Harze für sich allein als Filmbildner nicht eingesetzt werden können, wurden sie mit einigen herkömmlichen Bindemitteln kombiniert und der Antirutscheffekt getestet. Als herkömmliche Bindemittel wurden eingesetzt:

a) Alkohollösliche Nitrocellulose
b) Co-solvent-Polyamidharz
c) Äthanollösliches Polyamidharz.

*Beschreibung der Prüfung*

Die herkömmlichen Bindemittel nach a) - c) wurden jeweils 37,5%ig in Äthanol/Essigester = 1 : 1, Äthanol/Benzin = 1 : 1 bzw. Äthanol gelöst, dann die erfindungsgemäss mitverwendeten Kondensationprodukte in Form ihrer 75%igen Lösungen in Äthanol in abgestuften Mengen (5 - 70%, fest auf fest bezogen) zugesetzt und gut gemischt.

Ein Teil dieser Lösungen wurde mit dem jeweils verwendeten Lösungsmittel bzw. Lösungsmittelgemisch 1 : 1 auf Verdünnung geprüft, während mit Hilfe der anderen Menge Filme auf vorbehandelter Polyäthylenfolie in 12 μ Dicke aufgetragen wurden. Bewertet wurden das Aussehen der verdünnten und nicht verdünnten Lösungen sowie die aufgetragenen Filme.

Diese Filme wurden dann 1 Tag bzw. 4 Wochen bei Normklima (23°C, 50% rel. Luftfeuchtigkeit) gelagert und anschliessend die Antirutschwirkung manuell geprüft. Hierbei wurden die Drucke gegeneinander gefaltet, mit dem Daumen belastet und dann versucht, die obere Hälfte des Druckes durch Verschieben wieder zu entfernen.

Bewertung: 1 = deutlich spürbare Antirutschwirkung (Folie wird teilweise stark gedehnt)
2 = Antirutschwirkung noch ausreichend!
3 = Antirutschwirkung zu gering!
4 = durch zu hohe Anteile ist der Film klebring, verblockt in der Rolle!

Nach diesem Prüfschema wurden sämtliche in den nachfolgenden Tabellen aufgeführten Beispiele getestet und bewertet. Die Übergänge zwischen den einzelnen Bereichen sind natürlich nicht abrupt, sondern fliessend.

Wie den Ergebnissen der Tabellen 2 und 3 zu entnehmen ist, zeigten alle Produkte eine gute Verträglichkeit mit den eingesetzten handelsüblichen Bindemitteln und Lösungsmitteln: die Lösungen und Filme waren einwandfrei klar. Aus den erhaltenen Werten hinsichtlich des Antirutscheffektes geht hervor, dass folgende Mengen in der Regel gut anwendbar sind:

a) Alkohollösliche Nitrocellulose
10 - 70%, vorzugsweise 25 - 55%

b) Co-solvent-Polyamidharz
5 - 25%, vorzugsweise 10 - 20%

c) Äthanollösliches Polyamidharz
5 - 25%, vorzugsweise 5 - 15%.

Aus der Bewertung ist auch ersichtlich, dass die Grenzen der Eignung fliessend sind, so dass eine Abgrenzung in diesem Bereich nur annähernd möglich ist, wie aus den nachfolgenden Graphiken ersichtlich.

*Bewertung des Antirutscheffektes für Nitrocellulose*

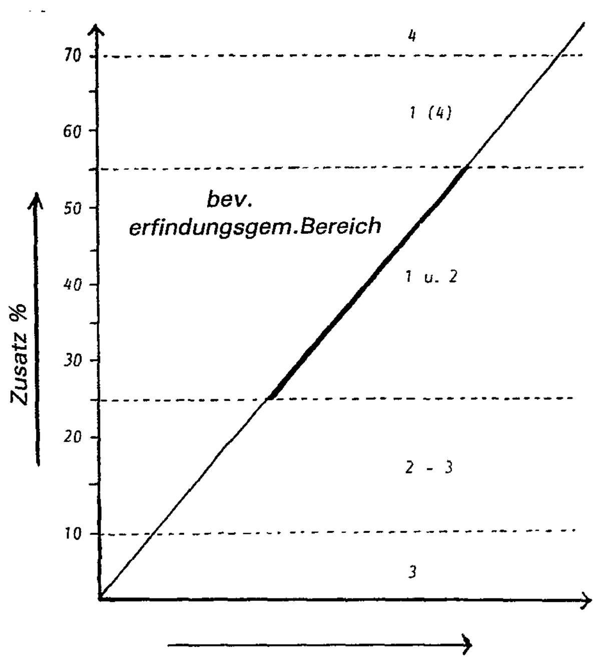


*Zunahme des Antirutscheffektes*

*Bewertung der Ziffern 1 - 4 vgl. Beschreibung Seite 6*

*Bewertung des Antirutscheffektes für ein Co-solventes Polyamidharz*

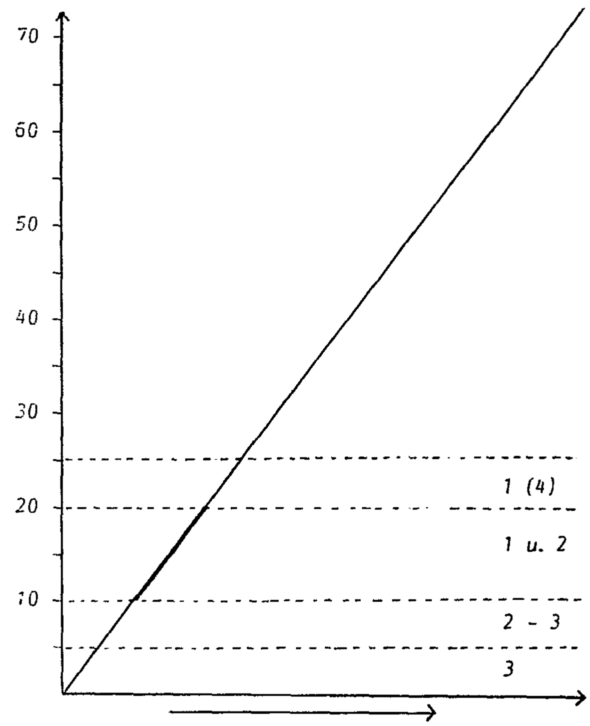


*Zunahme des Antirutscheffektes*

TABELLE 2

| Nr. | Produkt Nr. aus Tab. 1 | Zusatzmenge % fest/fest | Co-solvent Polyamidharz (1) g | Äthanollösliches Polyamidharz (2) g | Alkohollösliche Nitrocellulose (3) g | Lösungsmittel Äthanol g | Lösungsmittel Äthylacetat g | Lösungsmittel Benzin Kp 80-100°C g |
|---|---|---|---|---|---|---|---|---|
| 1 | 1 | 5 | — | — | 37,5 | 32,5 | 30,0 | — |
| 2 | 1 | 10 | — | — | 37,5 | 32,5 | 30,0 | — |
| 3 | 1 | 20 | — | — | 37,5 | 32,5 | 30,0 | — |
| 4 | 1 | 30 | — | — | 37,5 | 32,5 | 30,0 | — |
| 5 | 1 | 40 | — | — | 37,5 | 32,5 | 30,0 | — |
| 6 | 1 | 50 | — | — | 37,5 | 32,5 | 30,0 | — |
| 7 | 1 | 60 | — | — | 37,5 | 32,5 | 30,0 | — |
| 8 | 1 | 70 | — | — | 37,5 | 32,5 | 30,0 | — |
| 9 | 2 | 40 | — | — | 37,5 | 32,5 | 30,0 | — |
| 10 | 2 | 50 | — | — | 37,5 | 32,5 | 30,0 | — |
| 11 | 3 | 5 | 37,5 | — | — | 27,5 | — | 35,0 |
| 12 | 3 | 10 | 37,5 | — | — | 27,5 | — | 35,0 |
| 13 | 3 | 15 | 37,5 | — | — | 27,5 | — | 35,0 |
| 14 | 3 | 20 | 37,5 | — | — | 27,5 | — | 35,0 |
| 15 | 3 | 25 | 37,5 | — | — | 27,5 | — | 35,0 |
| 16 | 3 | 30 | 37,5 | — | — | 27,5 | — | 35,0 |
| 17 | 4 | 5 | — | 37,5 | — | 62,5 | — | — |
| 18 | 4 | 10 | — | 37,5 | — | 62,5 | — | — |
| 19 | 4 | 15 | — | 37,5 | — | 62,5 | — | — |
| 20 | 4 | 20 | — | 37,5 | — | 62,5 | — | — |
| 21 | 5 | 40 | — | — | 37,5 | 37,5 | 25,0 | — |
| 22 | 5 | 20 | 37,5 | — | — | 32,5 | — | 30,0 |
| 23 | 6 | 40 | — | — | 37,5 | 37,5 | 25,0 | — |
| 24 | 6 | 10 | — | 37,5 | — | 62,5 | — | — |
| 25 | 7 | 40 | — | — | 37,5 | 32,5 | 30,0 | — |
| 26 | 8 | 50 | — | — | 37,5 | 32,5 | 30,0 | — |
| 27 | 9 | 50 | — | — | 37,5 | 32,5 | 30,0 | — |
| 28 | 10 | 40 | — | — | 37,5 | 32,5 | 30,0 | — |
| 29 | 11 | 40 | — | — | 37,5 | 32,5 | 30,0 | — |
| 30 | 12 | 50 | — | — | 37,5 | 32,5 | 30,0 | — |
| 31 | 13 | 50 | — | — | 37,5 | 32,5 | 30,0 | — |
| 32 | 14 | 50 | — | — | 37,5 | 32,5 | 30,0 | — |
| 33 | 15 | 40 | — | — | 37,5 | 32,5 | 30,0 | — |
| 34 | 16 | 50 | — | — | 37,5 | 32,5 | 30,0 | — |
| 35 | 17 | 50 | — | — | 37,5 | 32,5 | 30,0 | — |
| Vergleichsbeispiele | | | | | | | | |
| 36 | handelsübliches | 30 | — | — | 37,5 | 32,5 | 30,0 | — |
| 37 | Polyaminoamid (4) | 15 | 37,5 | — | — | 32,5 | — | 30,0 |

TABELLE 3

| Nr. | Aussehen<br>Lösung unverdünnt | <br>Lösung verdünnt | <br>Druckfilm 18μ-Auftrag | Antirutscheffekt nach 1 Tag Lagerung | Antirutscheffekt nach 4 Wochen Lagerung |
|---|---|---|---|---|---|
| 1 | klar | klar | klar | 3 | 3 |
| 2 | klar | klar | klar | 2 - 3 | 2 - 3 |
| 3 | klar | klar | klar | 2 - 3 | 2 - 3 |
| 4 | klar | klar | klar | 2 | 2 |
| 5 | klar | klar | klar | 1 | 1 |
| 6 | klar | klar | klar | 1 | 1 |
| 7 | klar | klar | klar | 1 (4) | 1 (4) |
| 8 | klar | klar | klar | 4 | 4 |
| 9 | klar | klar | klar | 1 | 1 |
| 10 | klar | klar | klar | 1 | 1 |
| 11 | klar | klar | klar | 3 | 3 |
| 12 | klar | klar | klar | 2 - 3 | 2 - 3 |
| 13 | klar | klar | klar | 1 | 1 |
| 14 | klar | klar | klar | 1 | 1 |
| 15 | klar | klar | klar | 1 (4) | 1 (4) |
| 16 | klar | klar | klar | 4 | 4 |
| 17 | klar | klar | klar | 1 | 1 |
| 18 | klar | klar | klar | 1 | 1 |
| 19 | klar | klar | klar | 1 | 1 |
| 20 | klar | klar | klar | 1 (4) | 1 (4) |
| 21 | klar | klar | klar | 1 | 1 |
| 22 | klar | klar | klar | 1 | 1 |
| 23 | klar | klar | klar | 1 | 1 |
| 24 | klar | klar | klar | 1 | 1 |
| 25 | klar | klar | klar | 1 | 1 |
| 26 | klar | klar | klar | 1 | 1 |
| 27 | klar | klar | klar | 1 | 1 |
| 28 | klar | klar | klar | 1 | 1 |
| 29 | klar | klar | klar | 1 | 1 |
| 30 | klar | klar | klar | 1 | 1 |
| 31 | klar | klar | klar | 1 | 1 |
| 32 | klar | klar | klar | 1 | 1 |
| 33 | klar | klar | klar | 1 | 1 |
| 34 | klar | klar | klar | 1 | 1 |
| 35 | klar | klar | klar | 1 | 1 |
| *Vergleichsbeispiele* | | | | | |
| 36 | unverträglich, nicht anwendbar! | | | | |
| 37 | klar | klar | klar | 1 | 3 |

*Legende zu den Tabellen 2 und 3*

(1) = Polyamidharz auf Basis dimerisierter Fettsäure und äquivalenten Mengen Äthylendiamin

(2) = Polyamidharz auf Basis dimerisierter Fettsäure und äquivalenten Mengen eines Diamingemisches

(3) = Nitrocellulose-Normtyp 23 A DIN 53 179

(4) = Handelsübliches Polyaminoamid auf Basis dimerisierter Fettsäure und überschüssigem Diäthylentriamin mit einer Aminzahl von ca. 90

**Patentansprüche für die Vertragsstaaten:**
BE, DE, GB, FR, NL, IT, LU, SE, CH/LIE

1. Verfahren zur Herstellung von Antirutschlacken auf Basis von 1) üblichen Druckfarbenbindemitteln und 2) abstumpfend wirkenden Zusätzen, gegebenenfalls unter Mitverwendung von 3) Lösungsmitteln, Farbstoffen, Pigmenten, Antioxidantien, dadurch gekennzeichnet, dass als Komponente 2) Kondensationsprodukte aus 1,5 - 2 Äquivalenten polymerisierter Fettsäuren und 1 Äquivalent mindestens eines diprimären Ätherdiamins und gegebenenfalls mindestens eines Co-Diamins in Mengen von 5 - 70 Gew.-%, bezogen auf Druckfarbenbindemittel, verwendet werden.

2. Verfahren zur Herstellung von Antirutschlacken gemäss Anspruch 1, dadurch gekennzeichnet, dass das Äquivalenzverhältnis von polymerisierter Fettsäure zu Aminkomponente 2 : 1 beträgt.

3. Verfahren zur Herstellung von Antirutschlacken gemäss den Ansprüchen 1 und 2, dadurch gekennzeichnet, dass mindestens eines der Ätherdiamine 1,12-Diamino-4,9-dioxadodekan, 1,14-Diamino-4,11-dioxatetradekan, 1,14-Diamino-6,6,8-(6,8,8)-trimethyl-4,11-dioxatetradekan, 1,11-Diamino-6,6-dimethyl-4,8-dioxaundekan, 1,13-Diamino-4,7,10-trioxatridekan,

$$H_2N\text{-}\underset{R^2}{CH}\text{-}CH_2\text{-}(OCH_2\text{-}\underset{R^2}{CH})_m NH_2$$

mit m = 2 - 14 und $R^2$ = H oder $-CH_3$,

$$H_2N\text{-}(CH_2)_3\text{-}O\text{-}[(CH_2)_4\text{-}O]_k\text{-}(CH_2)_3\text{-}NH_2$$

mit k = 7 - 11 verwendet wird.

4. Verfahren zur Herstellung von Antirutschlacken gemäss Ansprüchen 1 bis 3, dadurch gekennzeichnet, dass das Äquivalenzverhältnis von Ätherdiamin zu Co-Diamin 1 : 0 - 0,2 : 0,8 beträgt.

5. Verfahren zur Herstellung von Antirutschlacken gemäss den Ansprüchen 1 bis 4, dadurch gekennzeichnet, dass als Co-Diamin 1,2-Diaminoäthan verwendet wird.

6. Verfahren zur Herstellung von Antirutschlacken gemäss Anspruch 1, dadurch gekennzeichnet, dass als Komponente 2) das Kondensationsprodukt aus 1 Äquivalent einer Mischung aus 1,12-Diamino-4,9-dioxadodekan und 1,2-Diaminoäthan im Äquivalenzverhältnis von 0,5 : 0,5 und 2 Äquivalenten polymerisierter Fettsäure mit einem Dimergehalt von 60 - 80 Gew.-% verwendet wird.

7. Abstumpfend wirkende Zusätze für die Herstellung von Antirutschlacken gemäss den Ansprüchen 1 bis 6, bestehend aus Kondensationsprodukten aus 1,5 - 2 Äquivalenten polymerisierter Fettsäuren und 1 Äquivalent mindestens eines diprimären Ätherdiamins und gegebenenfalls mindestens eines Co-Diamins.

8. Abstumpfend wirkende Zusätze gemäss Anspruch 7, dadurch gekennzeichnet, dass als Ätherdiamine 1,12-Diamino-4,9-dioxadodekan, 1,14-Diamino-4,11-dioxatetradekan, 1,14-Diamino-6,6,8-(6,8,8)-trimethyl-4,11-dioxatetradekan, 1,11-Diamino-6,6-dimethyl-4,8-dioxaundekan, 1,13-Diamino-4,7,10-trioxatridekan,

$$H_2N\text{-}\underset{R^2}{CH}\text{-}CH_2\text{-}(OCH_2\text{-}\underset{R^2}{CH})_m NH_2$$

mit m = 2 - 14 und $R^2$ = H oder $-CH_3$,

$$H_2N\text{-}(CH_2)_3\text{-}O\text{-}[(CH_2)_4\text{-}O]_k\text{-}(CH_2)_3\text{-}NH_2$$

mit k = 7 - 11 verwendet werden und als Co-Diamin 1,2-Diaminoäthan verwendet wird.

9. Abstumpfend wirkende Zusätze gemäss den Ansprüchen 7 und 8, dadurch gekennzeichnet, dass die Amine im Äquivalenzverhältnis von 1,0 - 0,2 : 0,8 verwendet werden.

10. Abstumpfend wirkende Zusätze gemäss Anspruch 7, hergestellt aus 2 Äquivalenten polymerisierter Fettsäure mit einem Dimergehalt von 60 - 80 Gew.-% und 1 Äquivalent einer Mischung aus 0,5 Äquivalenten 1,12-Diamino-4,9-dioxadodekan und 0,5 Äquivalenten 1,2-Diaminoäthan.

**Patentansprüche für den Vertragsstat:** AT

1. Verfahren zur Herstellung von Antirutschlacken auf Basis von 1) üblichen Druckfarbenbindemitteln und 2) abstumpfend wirkenden Zusätzen, gegebenenfalls unter Mitverwendung von 3) Lösungsmitteln, Farbstoffen, Pigmenten, Antioxidantien, dadurch gekennzeichnet, dass als Komponente 2) Kondensationsprodukte aus 1,5 - 2 Äquivalenten polymerisierter Fettsäuren und 1 Äquivalent mindestens eines diprimären Ätherdiamins und gegebenenfalls mindestens eines Co-Diamins in Mengen von 5 - 70 Gew.-%, bezogen auf Druckfarbenbindemittel, verwendet werden.

2. Verfahren zur Herstellung von Antirutschlacken gemäss Anspruch 1, dadurch gekennzeichnet, dass das Äquivalenzverhältnis von polymerisierter Fettsäure zu Aminkomponente 2 : 1 beträgt.

3. Verfahren zur Herstellung von Antirutschlacken gemäss den Ansprüchen 1 und 2, dadurch gekennzeichnet, dass mindestens eines der Ätherdiamine 1,12-Diamino-4,9-dioxadodekan, 1,14-Diamino-4,11-dioxatetradekan, 1,14-Diamino-6,6,8-(6,8,8)-trimethyl-4,11-dioxatetradekan, 1,11-Diamino-6,6-dimethyl-4,8-dioxaundekan, 1,13-Diamino-4,7,10-trioxatridekan,

$$H_2N\text{-}\underset{R^2}{CH}\text{-}CH_2\text{-}(OCH_2\text{-}\underset{R^2}{CH})_m NH_2$$

mit m = 2 - 14 und $R^2$ = H oder $-CH_3$,

$$H_2N\text{-}(CH_2)_3\text{-}O\text{-}[(CH_2)_4\text{-}O]_k\text{-}(CH_2)_3\text{-}NH_2$$

mit k = 7 - 11 verwendet wird.

4. Verfahren zur Herstellung von Antirutschlakken gemäss Ansprüchen 1 bis 3, dadurch gekennzeichnet, dass das Äquivalenzverhältnis von Ätherdiamin zu Co-Diamin 1 : 0 - 0,2 : 0,8 beträgt.

5. Verfahren zur Herstellung von Antirutschlakken gemäss den Ansprüchen 1 bis 4, dadurch gekennzeichnet, dass als Co-Diamin 1,2-Diaminoäthan verwendet wird.

6. Verfahren zur Herstellung von Antirutschlakken gemäss Anspruch 1, dadurch gekennzeichnet, dass als Komponente 2) das Kondensationsprodukt aus 1 Äquivalent einer Mischung aus 1,12-Diamino-4,9-dioxadodekan und 1,2-Diaminoäthan im Äquivalenzverhältnis von 0,5 : 0,5 und 2 Äquivalenten polymerisierter Fettsäure mit einem Dimergehalt von 60 - 80 Gew.-% verwendet wird.

7. Verfahren zur Herstellung abstumpfend wirkender Zusätze für die Herstellung von Antirutschlacken nach an und für sich bekannten Bedingungen durch Kondensation von 1,5 - 2 Äquivalenten polymerisierter Fettsäuren und 1 Äquivalent mindestens eines diprimären Ätherdiamins und gegebenenfalls mindestens eines Co-Diamins.

8. Verfahren zur Herstellung abstumpfend wirkender Zusätze gemäss Anspruch 7, dadurch gekennzeichnet, dass als Ätherdiamine 1,12-Diamino-4,9-dioxadodekan, 1,14-Diamino-4,11-dioxatetradekan, 1,14-Diamino-6,6,8(6,8,8)-trimethyl-4,11-dioxatetradekan, 1,11-Diamino-6,6-dimethyl-4,8-dioxaundekan, 1,13-Diamino-4,7,10-trioxatridekan,

$$H_2N\text{-}\underset{R^2}{\underset{|}{CH}}\text{-}CH_2\text{-}(OCH_2\text{-}\underset{R^2}{\underset{|}{CH}})_m NH_2$$

mit m = 2 - 14 und $R^2$ = H oder $-CH_3$,

$$H_2N\text{-}(CH_2)_3\text{-}O\text{-}[(CH_2)_4\text{-}O]_k\text{-}(CH_2)_3\text{-}NH_2$$

mit k = 7 - 11 verwendet wird.

9. Verfahren zur Herstellung abstumpfend wirkender Zusätze gemäss den Ansprüchen 7 und 8, dadurch gekennzeichnet, dass die Amine im Äquivalenzverhältnis von 1,0 - 0,2 : 0,8 verwendet werden.

10. Verfahren zur Herstellung abstumpfend wirkender Zusätze gemäss Anspruch 7, dadurch gekennzeichnet, dass die Zusätze aus 2-Äquivalenten polymerisierter Fettsäure mit einem Dimergehalt von 60 - 80 Gew.-% und 1 Äquivalent einer Mischung aus 0,5 Äquivalenten 1,12-Diamino-4,9-dioxadodekan und 0,5 Äquivalenten 1,2-Diaminoäthan hergestellt werden.

**Claims for the Constracting States:**
BE, DE, GB, FR, NL, IT, LU, SE, CH/LIE

1. Method for the preparation of anti-slip lacquers based on 1) usual printing ink binding agents and 2) neutralising additives optionally together with 3) solvents, dyes, pigments, anti-oxidants, characterised in that condensation products of 1.5 - 2 equivalents of polymerised fatty acids and at least 1 equivalent of a diprimary ether diamine and optionally at least one co-diamine in amounts of 5-70% by weight based on the printing ink binding agent, are used as component.

2. Method for the preparation of anti-slip lacquers according to claim 1, characterised in that the equivalence ratio of the polymerised fatty acids to the amino-component amounts to 2 : 1.

3. Method for the preparation of anti-slip lacquers according to claims 1 and 2, characterised in that at least one of the ether diamines 1,12-diamino-4,9-dioxadodecane, 1,14-diamino-4,11-dioxatetradecane, 1,14-diamino-6,6,8(6,8,8)-trimethyl-4,11-dioxatetradecane, 1,11-diamino-6,6-dimethyl-4,8-dioxaundecane, 1,13-diamino-4,7,10-trioxatridecane,

$$H_2N\text{-}\underset{R^2}{\underset{|}{CH}}\text{-}CH_2\text{-}(OCH_2\text{-}\underset{R^2}{\underset{|}{CH}})_m NH_2$$

with m = 2 - 14 and $R^2$ = H or $CH_3$,

$$H_2N\text{-}(CH_2)_3\text{-}O\text{-}[(CH_2)_4\text{-}O]_k\text{-}(CH_2)_3\text{-}NH_2$$

with k = 7 - 11 are used.

4. Method for the preparation of anti-slip lacquers according to claims 1 to 3, characterised in that the equivalence ratio of ether diamine to the co-diamine amounts to 1 : 0 - 0.2 : 0.8.

5. Method for the preparation of anti-slip lacquers according to claims 1 to 4, characterised in that 1,2-diaminoethane is used as the co-diamine.

6. Method for the preparation of anti-slip lacquers according to claim 1, characterised in that the condensation product of 1 equivalent of a mixture of 1,12-diamino-4,9-dioxadodecane and 1,2-diaminoethane in an equivalence ratio of 0.5 : 0.5 and 2 equivalents of polymerised fatty acids with a dimer content of 60 - 80% by weight is used as component 2).

7. Neutralising additives for the preparation of anti-slip lacquers according to claims 1 to 6, consisting of condensation products of 1.5 - 2 equivalents of polymerised fatty acids and at least 1 equivalent of a diprimary ether diamine and optionally at least one co-diamine.

8. Neutralising additives according to claim 7, characterised in that 1,12-diamino-4,9-dioxadodecane, 1,14-diamino-4,11-dioxatetradecane, 1,14-diamino-6,6,8(6,8,8)-trimethyl-4,11-dioxatetradecane, 1,11-diamino-6,6-dimethyl-4,8-di-oxaundecane, 1,13-diamino-4,7,10-trioxatridecane,

$$H_2N\text{-}\underset{R^2}{\underset{|}{CH}}\text{-}CH_2\text{-}(OCH_2\text{-}\underset{R^2}{\underset{|}{CH}})_m NH_2$$

with m = 2 - 14 and $R^2$ = H or $CH_3$,

$$H_2N\text{-}(CH_2)_3\text{-}O\text{-}[(CH_2)_4\text{-}O]_k\text{-}(CH_2)_3\text{-}NH_2$$

with k = 7 - 11 are used as the ether diamine and 1,2-diaminoethane is used as the co-diamine.

9. Neutralising additives according to claims 7 and 8, characterised in that the amine is used in an equivalence ratio of 1.0 - 0.2 : 0.8.

10. Neutralising additives according to claim 7 prepared from 2 equivalents of polymerised fatty

acids with a dimer content of 60 - 80% by weight and 1 equivalent of a mixture of 0.5 equivalents of 1,12-diamino-4,9-dioxadodecane and 0.5 equivalents of 1,2-diaminoethane.

**Claims for the Contracting State:** AT

1. Method for the preparation of anti-slip lacquers based on 1) usual printing ink binding agents and 2) neutralising additives optionally together with 3) solvents, dyes, pigments, anti-oxidants, characterised in that condensation products of 1.5 - 2 equivalents of polymerised fatty acids and at least 1 equivalent of a diprimary ether diamine and optionally at least one co-diamine in amounts of 5-70% by weight based on the printing ink binding agent, are used as component.

2. Method for the preparation of anti-slip lacquers according to claim 1, characterised in that the equivalence ratio of the polymerised fatty acids to the amino-component amounts to 2 : 1.

3. Method for the preparation of anti-slip lacquers according to claims 1 and 2, characterised in that at least one of the ether diamines 1,12-diamino-4,9-dioxadodecane, 1,14-diamino-4,11-dioxatetradecane, 1,14-diamino-6,6,8(6,8,8)-trimethyl-4,11-dioxatetradecane, 1,11-diamino-6,6-dimethyl-4,8-dioxaundecane, 1,13-diamino-4,7,10-trioxatridecane,

$H_2N\text{-}CH\text{-}CH_2\text{-}(\text{-}OCH_2\text{-}CH\text{-})_m NH_2$
| |
$R^2$ $R^2$

with m = 2 - 14 and $R^2$ = H or $CH_3$,

$H_2N\text{-}(CH_2)_3\text{-}O\text{-}[(CH_2)_4\text{-}O]_k\text{-}(CH_2)_3\text{-}NH_2$

with k = 7 - 11 are used.

4. Method for the preparation of anti-slip lacquers according to claims 1 to 3, characterised in that the equivalence ratio of ether diamine to the co-diamine amounts to 1 : 0 - 0.2 : 0.8.

5. Method for the preparation of anti-slip lacquers according to claims 1 to 4, characterised in that 1,2-diaminoethane is used as the co-diamine.

6. Method for the preparation of anti-slip lacquers according to claim 1, characterised in that the condensation product of 1 equivalent of a mixture of 1,12-diamino-4,9-dioxadodecane and 1,2-diaminoethane in a equivalence ratio of 0.5 : 0.5 and 2 equivalents of polymerised fatty acids with a dimer content of 60 - 80% by weight is used as component 2).

7. Method for the preparation of neutralising additives for the anti-slip lacquers under known conditions by condensation of 1.5 - 2 equivalents of polymerised fatty acids and at least 1 equivalent of a diprimary ether diamine and optionally at least one co-diamine.

8. Method for the preparation of neutralising additives according to claim 7, characterised in that 1,12-diamino-4,9-dioxadodecane, 1,14-diamino-4,11-dioxatetradecane, 1,14-diamino-6,6,8(6,8,-8)-trimethyl-4,11-dioxatetradecane, 1,11-diamino-6,6-dimethyl-4,8-di-oxaundecane, 1,13-diamino-4,7,10-trioxatridecane,

$H_2N\text{-}CH\text{-}CH_2\text{-}(\text{-}OCH_2\text{-}CH\text{-})_m NH_2$
| |
$R^2$ $R^2$

with m = 2 - 14 and $R^2$ = H or $CH_3$,

$H_2N\text{-}(CH_2)_3\text{-}O\text{-}[(CH_2)_4\text{-}O]_k\text{-}(CH_2)_3\text{-}NH_2$

with k = 7 - 11 are used as the ether diamine and 1,2-diaminoethane is used as the co-diamine.

9. Method for the preparation of neutralising additives according to claims 7 and 8, characterised in that the amine is used in an equivalence ratio of 1.0 to 0.2 : 0.8.

10. Method for the preparation of neutralising additives according to claim 7, characterised in that the additives are prepared from 2 equivalents of polymerised fatty acids with a dimer content of 60 - 80% by weight and 1 equivalent of a mixture of 0.5 equivalents of 1,12-diamino-4,9-dioxadodecane and 0.5 equivalents of 1,2-diaminoethane.

**Revendications pour les Etats constractants:**
DE, DE, GB, FR, NL, IT, LU, SE, CH/LIE

1. Procédé pour préparer des peintures et vernis antiglissements à base 1) de liants usuels pour encres d'impression et 2) d'additifs à rôle d'amortissement, éventuellement en utilisant simultanément 3) des solvants, des colorants, des pigments, des antioxydants, procédé caractérisé en ce qu'on utilise comme composant 2) des produits de condensation de 1,5 à 2 équivalents d'acides gras polymérisés et d'1 équivalent d'au moins une oxyde-diamine diprimaire et d'éventuellement au moins une co-diamine en des quantités de 5 à 70% en poids, sur la base du liant pour encres d'impression.

2. Procédé pour préparer des peintures et vernis selon la revendication 1, caractérisé en ce que le rapport entre les équivalents de l'acide gras polymérisé et du composant amine est égal à 2 : 1.

3. Procédé pour préparer des peintures et vernis antiglissements selon les revendications 1 et 2, caractérisé en ce qu'on utilise l'une des oxyde-diamines que sont le diamino-1,12 dioxa-4,9 dodécane, le diamino-1,14 dioxa-4,11-tétradécane, le diamino-1,14 triméthyl-6,6,8 (6,8,8)dioxa-4,11 tétradécane, le diamino-1,11 diméthyl-6,6 dioxa-4,8 undécane, le diamino-1,13 trioxa-4,7,10 tridécane,

$H_2N\text{-}CH\text{-}CH_2\text{-}(\text{-}OCH_2\text{-}CH\text{-})_m NH_2$
| |
$R^2$ $R^2$

dans laquelle m vaut 2 à 14 et
$R^2$ représente H ou $CH_3$,

$H_2N\text{-}(CH_2)_3\text{-}O\text{-}[(CH_2)_4\text{-}O]_k\text{-}(CH_2)_3\text{-}NH_2$

dans laquelle k vaut 7 à 11.

4. Procédé pour préparer des peintures et vernis antiglissements selon les revendications 1 à 3, caractérisé en ce que le rapport entre les équivalents de l'oxyde-diamine et de la co-diamine se situe entre 1 : 0 et 0,2 : 0,8.

5. Procédé pour préparer des peintures et vernis antiglissements selon les revendications 1 à 4, caractérisé en ce qu'on utilise comme co-diamine le diamino-1,2 étane.

6. Procédé pour préparer des peintures et vernis antiglissements selon la revendication 1, caractérisé en ce qu'on utilise comme composant 2) le produit de condensation d'un équivalent d'un mélange de diamino-1,12 dioxa-4,9 dodécane et de diamino-1,2 éthane selon un rapport entre les équivalents égal à 0,5 : 0,5 et 2 équivalents d'acides gras polymérisés ayant une teneur en dimère de 60 à 80% en poids.

7. Additifs à effet d'affaiblissement ou d'amortissement pour la préparation de peintures et vernis antiglissements selon les revendications 1 à 6, caractérisés en ce qu'ils consistent en les produits de condensation de 1,5 à 2 équivalents d'acides gras polymérisés et d'1 équivalent d'au moins une oxyde-diamine diprimaire et éventuellemet au moins une co-diamine.

8. Additifs à effet d'affaiblissement ou d'amortissement selon la revendication 7, caractérisés en ce qu'on utilise comme oxyde-diamines le diamino-1,12 dioxa-4,9 dodécane, le diamino-1,14 dioxa-4,11 tétradécane, le diamino-1,14 triméthyl-6,6,8 (6,8,8) dioxa-4,11 tétradécane, le diamino-1,11 diméthyl-6,6 dioxa-4,8 undécane, le diamino-1,13 trioxa-4,7,10 tridécane,

$$H_2N\text{-}\underset{\substack{|\\ R^2}}{CH}\text{-}CH_2\text{-}(\text{-}OCH_2\text{-}\underset{\substack{|\\ R^2}}{CH}\text{-})_m NH_2$$

où m vaut 2 à 14 et $R^2$ représente H ou $-CH_3$,

$$H_2N\text{-}(CH_2)_3\text{-}O\text{-}[(CH_2)_4\text{-}O]_k\text{-}(CH_2)_3\text{-}NH_2$$

où k vaut 7 à 11 et l'on utilise comme co-diamine le diamino-1,2 éthane.

9. Additifs à effet d'affaiblissement ou d'amortissement selon les revendications 7 et 8, caractérisés en ce qu'on utilise les amines selon un rapport entre les équivalents allant de 1,0 à 0,2 : 0,8.

10. Additifs à effet d'affaiblissement ou d'amortissement selon la revendication 7, caractérisés en ce qu'ils sont produits à partir de 2 équivalents d'acides gras polymérisés ayant une teneur en dimère de 60 à 80% en poids et d'1 équivalent d'un mélange de 0,5 équivalent de diamino-1,12 dioxa-4,9 dodécane et de 0,5 équivalent de diamino-1,2 éthane.

**Revendications pour l'Etat contractant:** AT

1. Procédé pour préparer des peintures et vernis antiglissements à base 1) de liants usuels pour encres d'impression et 2) d'additifs à rôle d'amortissement, éventuellement en utilisant simultanément 3) des solvants, des colorants, des pigments, des antioxydants, procédé caractérisé en ce qu'on utilise comme composant 2) des produits de condensation de 1,5 à 2 équivalents d'acides gras polymérisés et d'1 équivalent d'au moins une oxyde-diamine diprimaire et d'éventuellement au moins une co-diamine en des quantités de 5 à 70% en poids, sur la base du liant pour encres d'impression.

2. Procédé pour préparer des peintures et vernis selon la revendication 1, caractérisé en ce que le rapport entre les équivalents de l'acide gras polymérisé et du composant amine est égal à 2 : 1.

3. Procédé pour préparer des peintures et vernis antiglissements selon les revendications 1 et 2, caractérisé en ce qu'on utilise l'une des oxyde-diamines que sont le diamino-1,12 dioxa-4,9 dodécane, le diamino-1,14 dioxa-4,11-tétradécane, le diamino-1,14 triméthyl-6,6,8 (6,8,8)dioxa-4,11 tétradécane, le diamino-1,11 diméthyl-6,6 dioxa-4,8 undécane, le diamino-1,13 trioxa-4,7,10 tridécane,

$$H_2N\text{-}\underset{\substack{|\\ R^2}}{CH}\text{-}CH_2\text{-}(\text{-}OCH_2\text{-}\underset{\substack{|\\ R^2}}{CH}\text{-})_m NH_2$$

dans laquelle m vaut 2 à 14 et
$R^2$ représente H ou $CH_3$,

$$H_2N\text{-}(CH_2)_3\text{-}O\text{-}[(CH_2)_4\text{-}O]_k\text{-}(CH_2)_3\text{-}NH_2$$

dans laquelle k vaut 7 à 11.

4. Procédé pour préparer des peintures et vernis antiglissements selon les revendications 1 à 3, caractérisé en ce que le rapport entre les équivalents de l'oxyde-diamine et de la co-diamine se situe entre 1 : 0 et 0,2 : 0,8.

5. Procédé pour préparer des peintures et vernis antiglissements selon les revendications 1 à 4, caractérisé en ce qu'on utilise comme co-diamine le diamino-1,2 étane.

6. Procédé pour préparer des peintures et vernis antiglissements selon la revendication 1, caractérisé en ce qu'on utilise comme composant 2) le produit de condensation d'un équivalent d'un mélange de diamino-1,12 dioxa-4,9 dodécane et de diamino-1,2 éthane selon un rapport entre les équivalents égal à 0,5 : 0,5 et 2 équivalents d'acides gras polymérisés ayant une teneur en dimère de 60 à 80% en poids.

7. Procédé pour préparer des additifs à effet d'amortissement ou d'affaiblissement pour la préparation de peintures et vernis antiglissements selon et dans des conditions connues en elle-mêmes, par condensation de 1,5 à 2 équivalents d'acides gras polymérisés et d'1 équivalent d'au moins une oxyde-diamine diprimaire et éventuellemet au moins une co-diamine.

8. Procédé pour préparer des additifs à effet d'amortissement ou d'affaiblissement selon la revendication 7, caractérisé en ce qu'on utilise comme oxyde-diamines le diamino-1,12 dioxa-4,9 dodécane, le diamino-1,14 dioxa-4,11 tétradécane, le diamino-1,14 triméthyl-6,6,8 (6,8,8) dioxa-4,11 tétradécane, le diamino-1,11 diméthyl-6,6 dioxa-4,8 undécane, le diamino-1,13 trioxa-4,7,10 tridécane,

$$H_2N\text{-}\underset{\substack{|\\ R^2}}{CH}\text{-}CH_2\text{-}(\text{-}OCH_2\text{-}\underset{\substack{|\\ R^2}}{CH}\text{-})_m NH_2$$

où m vaut 2 à 14 et $R^2$ représente H ou $-CH_3$,

$$H_2N\text{-}(CH_2)_3\text{-}O\text{-}[(CH_2)_4\text{-}O]_k\text{-}(CH_2)_3\text{-}NH_2$$

où k vaut 7 à 11, et l'on utilisé comme co-diamine le diamino-1,2 éthane.

9. Procédé pour préparer des additifs à effet d'affaiblissement ou d'amortissement selon les revendications 7 et 8, caractérisé en ce qu'on utilise

les amines selon un rapport entre les équivalents compris entre 1,0 à 0,2 : 0,8.

10. Procédé pour préparer des additifs à effet d'amortissement ou d'affaiblissement selon la revendication 7, caractérisé en ce qu'on prépare les additifs à partir de 2 équivalents d'acides gras polymérisés ayant une teneur en dimère de 60 à 80% en poids et d'1 équivalent d'un mélange de 0,5 équivalent de diamino-1,12 dioxa-4,9 dodécane et de 0,5 équivalent de diamino-1,2 éthane.